# EUROPEAN PATENT APPLICATION

(11) **EP 4 807 396 A1**
(43) Date of publication of application: **16.09.2026**
(21) Application number: 26163291.3
(22) Date of filing: 09.03.2026
(51) Int. Cl.: G01S 13/72, G01S 13/42, G01S 13/58

(54) **FREQUENCY HOPPING ANGULAR SPREAD IMPULSE RADIO ULTRA-WIDEBAND RADAR**

(30) Priority: 14.03.2025 US 202519080122
(71) Applicant: NXP USA, Inc, Austin, TX 78735 (US)
(72) Inventor: Du, Jianxuan, 5656AG Eindhoven (NL); Jojo Kochery, Ajith, 5656AG Eindhoven (NL)
(74) Representative: Schwarzweller, Thomas

(57) **Abstract**

A Frequency Hopping Angular Spread (FHAS) technique senses an environment multiple times using an IR-UWB, a Phase-Modulated Continuous Wave (PMCW), or another modulation scheme, and a carrier signal having a different frequency offset during different intervals and to create an angular spread of reflections in corresponding observations, thereby enabling separation of a reflected signal component from a coupled signal component for enhanced radar capability and accuracy. Embodiments of the FHAS technique generate a collected complex Channel Impulse Response (CIR). Embodiments of the FHAS technique use the angular spread of reflections and the collected complex CIR to separate a reflected signal component from a coupled signal component where the reflected signal component corresponds to a reflection from a static object or a relatively close object, thereby reducing the range of a blind zone in radar and providing capabilities for increasing precision of object distance estimation in a radar system.

## Description

### BACKGROUND

### Field of the Invention

The present disclosure relates to wireless communications and more particularly to radar communications systems.

### SUMMARY OF EMBODIMENTS OF THE INVENTION

In at least one embodiment, a method for sensing an environment by a radar transceiver includes receiving a first received signal during a first interval using a carrier signal having a first frequency. The method includes receiving a second received signal during a second interval using the carrier signal having a second frequency. The second frequency is different from the first frequency. The method includes estimating a reflected signal component of the first received signal based on the first received signal and the second received signal, the reflected signal component and a second reflected signal component of the second received signal having an angular spread corresponding to an offset between the first frequency and the second frequency.

An embodiment of the method includes detecting presence of the reflected signal component based on a comparison of the estimated reflected signal component to a predetermined threshold value.

In an embodiment of the method, a frequency offset between the second frequency and the first frequency is associated with a variable phase within a sample interval, the estimated reflected signal is associated with a subinterval of the sample interval including a plurality of subintervals, and each subinterval of the plurality of subintervals has a constant phase.

In an embodiment of the method, estimating the reflected signal component includes generating a collected complex Channel Impulse Response (CIR) based on the first received signal and the second received signal, and includes determining the estimated reflected signal component and an estimated coupled signal component based on the collected complex CIR and a channel estimate.

In an embodiment of the method, a first channel impulse response observed by the radar transceiver of a coupled path of a coupled signal component overlaps or substantially overlaps a second channel impulse response observed by the radar transceiver of a reflected path of the reflected signal component.

In an embodiment of the method, a dynamic range of the receiving by the radar transceiver is less than a ratio of a first signal level of a coupled signal component and a second level of the reflected signal component.

In an embodiment of the method, the reflected signal component is reflected by an object at close range.

In an embodiment of the method, the reflected signal component is reflected by a static object.

In an embodiment of the method, the offset between the first frequency and the second frequency is at least an order of magnitude less than the first frequency.

An embodiment of the method includes transmitting information during the first interval using the carrier signal having the first frequency, and transmitting the information during the second interval using the carrier signal having the second frequency, where the information is transmitted using an Impulse Radio (IR) Ultra-Wideband (UWB) signal.

An embodiment of the method includes transmitting information during the first interval using the carrier signal having the first frequency, and transmitting the information during the second interval using the carrier signal having the second frequency, where the information is transmitted using a Phase-Modulated Continuous Wave (PMCW) signal.

In an embodiment, a radar transceiver includes a receiver circuit path configured to receive a first received signal based on a carrier signal during a first interval and configured to receive a second received signal based on the carrier signal during a second interval. The radar transceiver includes a programmable oscillator configured to provide the carrier signal having a first frequency during the first interval and to provide the carrier signal having a second frequency during the second interval. The radar transceiver includes data processing circuitry configured to estimate a reflected signal component of the first received signal based on the first received signal and the second received signal, the reflected signal component and a second reflected signal component of the second received signal having a predetermined angular spread corresponding to an offset between the first frequency and the second frequency.

In an embodiment of the radar transceiver, the data processing circuitry is further configured to detect presence of the reflected signal component based on a comparison of the estimated reflected signal component to a predetermined threshold value.

In an embodiment, the radar transceiver further includes a transmitter circuit path configured to transmit information during the first interval using the carrier signal having the first frequency and to transmit the information during the second interval using the carrier signal having the second frequency. In an embodiment, the radar transceiver further includes a carrier frequency selector circuit configured to provide a control signal to the programmable oscillator, the control signal having a first value during the first interval and having a second value during the second interval. In an embodiment of the radar transceiver the programmable oscillator provides the carrier signal based on the control signal.

In an embodiment of the radar transceiver, the data processing circuitry is further configured to generate a collected complex CIR based on the first received signal and the second received signal and the data processing circuitry is configured to estimate the reflected signal component and an estimated coupled signal component based on the collected complex CIR and a channel estimate.

In an embodiment of the radar transceiver, the first received signal includes the reflected signal component and a coupled signal component. In an embodiment of the radar transceiver, the second received signal includes the second reflected signal component and a second coupled signal component. In an embodiment of the radar transceiver, a frequency offset between the second frequency and the first frequency is associated with a variable phase within a sample interval and the estimated reflected signal is associated with a subinterval of the sample interval including a plurality of subintervals and each subinterval of the plurality of subintervals has a constant phase.

In an embodiment of the radar transceiver, a first channel impulse response observed by the radar transceiver of a coupled path of a coupled signal component overlaps or substantially overlaps a second channel impulse response observed by the radar transceiver of a reflected path of the reflected signal component.

In an embodiment of the radar transceiver, a dynamic range of the receiving by the radar transceiver is less than a ratio of a first signal level of a coupled signal component and a second level of the reflected signal component. In an embodiment of the radar transceiver, the reflected signal component is reflected by an object at close range or by a static object.

### BRIEF DESCRIPTION OF THE DRAWINGS

The present invention is illustrated by way of example and is not limited by the accompanying figures, in which like references indicate similar elements. Elements in the figures are illustrated for simplicity and clarity and have not necessarily been drawn to scale.
**FIG. 1** illustrates a functional block diagram of a radar system.
**FIG. 2** illustrates sample amplitude of a complex Channel Impulse Response (CIR) as a function of sample time index of the radar system of FIG. 1.
**FIG. 3** illustrates a functional block diagram of a radar system implementing a Frequency Hopping Angular Spread (FHAS) technique.
**FIG. 4** illustrates phase rotation of observed complex CIR samples corresponding to signals transmitted using different carrier frequencies.
**FIG. 5** illustrates frequency of a carrier signal as a function of time for an embodiment of a radar system implementing the FHAS technique.
**FIG. 6** illustrates information and control flow for an embodiment of the FHAS technique.

The use of the same reference symbols in different drawings indicates similar or identical items.

### DETAILED DESCRIPTION

Impulse Radio Ultra-Wide-Band (IR-UWB) is a single-carrier communications technique that uses a burst of short duration pulses (e.g., pulses having pulse width in the range of nano-seconds) for communicating information and is used for data communication and ranging in applications such as authentication for secure hands-free access and for sensing the environment and improving user experience in radar applications. Performance of a typical IR-UWB radar system has the drawback of coupling between a transmitting antenna and a receiving antenna, which causes challenges for detecting a reflected signal. For example, limited isolation between the transmitter and receiver (e.g., isolation of 0-30 dB) and higher propagation attenuation of reflected signals as compared to coupled signals cause a coupled signal component to dominate the received signal. A conventional object detection technique estimates the coupled signal and removes the coupled signal before performing object detection techniques. However, removing the coupled signal from a received signal removes static reflections from the received signal and may cause moving objects and static objects in close range, to be undetectable. Accordingly, improved techniques for using radar to sense the environment are desired.

A Frequency Hopping Angular Spread (FHAS) technique senses an environment multiple times using an IR-UWB, a Phase-Modulated Continuous Wave (PMCW), or another modulation scheme, and a carrier signal having a different frequency offset during different intervals and to create an angular spread of reflections in corresponding observations, thereby enabling separation of a reflected signal component from a coupled signal component for enhanced radar capability and accuracy. Embodiments of the FHAS technique generate a collected complex Channel Impulse Response (CIR), which is a time domain representation of how the radar signal interacts with its environment as it travels from the transmitter antenna to the receiver antenna and represents the strength of the reflected signal component at different time delays due to multiple propagation paths between the radar transceiver and an object and at the different frequencies. Embodiments of the FHAS technique use the angular spread of reflections and the collected complex CIR to separate a reflected signal component from a coupled signal component where the reflected signal component corresponds to a reflection from a static object or a relatively close object, thereby reducing the range of a blind zone in radar and providing capabilities for increasing precision of object distance estimation in a radar system.

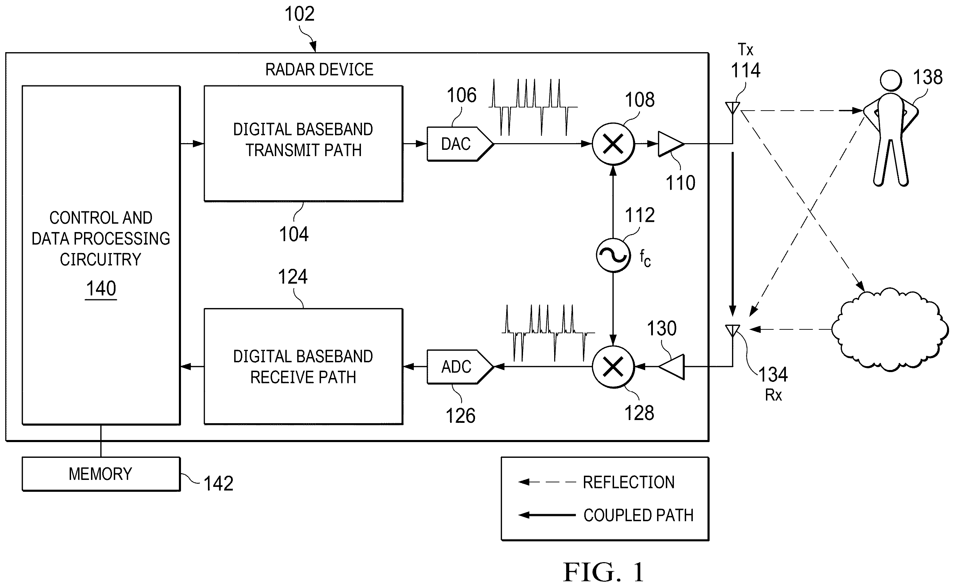

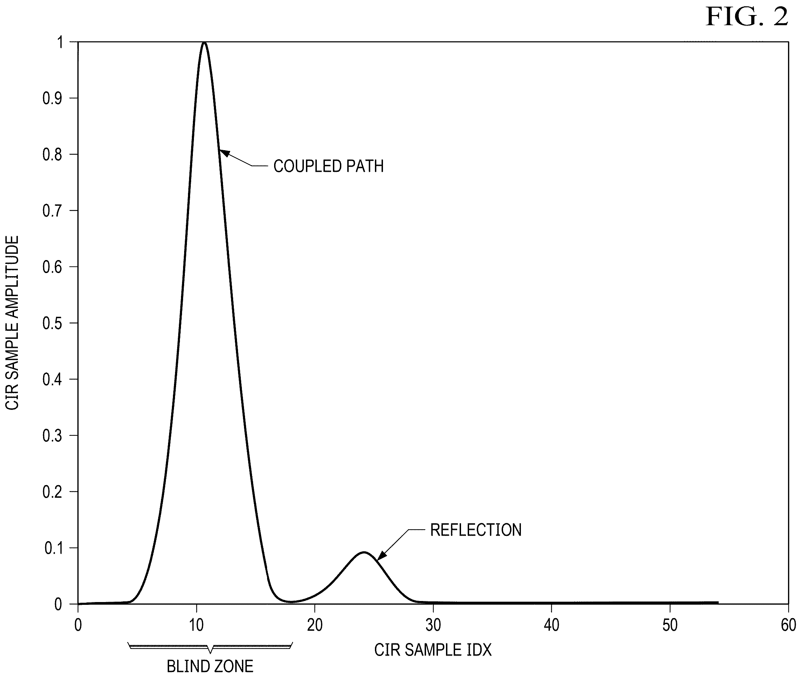

Referring to FIGS. 1 and 2, an exemplary radar system includes radar transceiver 102 having baseband transmitter path 104 and digital-to-analog converter 106 that generate a baseband signal using IR-UWB. The baseband signal includes a series of short pulses at regular intervals modulated by information. Typically, the information used to modulate the short pulses is a sequence having a relatively high autocorrelation property. Oscillator 112 generates carrier signal having a frequency *f_{c}*. Mixer 108 uses the carrier signal to convert the baseband signal to an RF signal and power amplifier 110 amplifies the RF signal and drives antenna 114 to transmit the RF signal over the air. A corresponding electromagnetic wave radiates from transmitting antenna 114. Receiving antenna 134 receives reflections of the electromagnetic wave from one or more interfaces in the surrounding environment. After low-noise amplifier 130 amplifies a received RF signal and mixer 128 uses the carrier signal to convert the received RF signal to baseband, analog-to-digital converter 126 and digital baseband receiver path 124 and control and data processing circuitry 140 executes instructions stored in memory 142 to demodulate the signal (e.g., using correlation techniques) and generate an observed complex Channel Impulse Response (CIR). In general, the complex CIR is a time domain representation of how the radar signal interacts with its environment as it travels from the transmitter antenna 114 to receiver antenna 134 and represents the strength of the reflected signal component at different time delays due to multiple propagation paths between radar transceiver 102 and object 138. Control and data processing circuitry 140 uses the observed complex CIR and techniques known in the art to determine a distance from radar transceiver 102, geometry, or surrounding environment of object 138.

Radar transceiver 102 sends over the air, signal *s(t),* which includes a train of pulses with pulse shape *h(t)* modulated by sequence *b[i]* to be reflected by an object and received by radar transceiver 102: $s \left(t\right) = {e}^{j 2 π {f}_{c} t} {\sum }_{i} b \left[i\right] h \left(t-i⋅{δ}_{L}⋅{T}_{c}\right) ,$ where *f_{c}* is the nominal carrier frequency, *T_{c}* is chip duration, and *δ_{L}* is radar pulse spacing, in chips. In an embodiment, radar transceiver 102 implements direct sequence UWB compliant with IEEE standard 802.15.4 and *T_{c}* = 2 ns, although other embodiments use other chip durations. Antenna 134 receives a coupled signal (i.e., a signal coupled by a path from antenna 114 to antenna 134) and reflections of the transmitted RF signal (e.g., electromagnetic waves reflected by object 138). Low-noise amplifier 130 amplifies the received RF signal and mixer 128 converts the received RF signal to a baseband signal, thereby generating received signal *r(t):* $\begin{matrix}r \left(t\right) = {e}^{- j 2 π {f}_{c} t} \left({\sum }_{k} {α}_{k} {e}^{j 2 π {f}_{c} \left(t-{τ}_{k}\right)}{\sum }_{i} b \left[i\right] ⋅ h ′ \left(t-{τ}_{k}-i⋅{δ}_{L}⋅{T}_{c}\right) + z \left(t\right)\right) \\ = {\sum }_{k} {α}_{k} {e}^{- j 2 π {f}_{c} {τ}_{k}} {\sum }_{i} b \left[i\right] ⋅ h ′ \left(t-{τ}_{k}-i⋅{δ}_{L}⋅{T}_{c}\right) + z ′ \left(t\right) ,\end{matrix}$ where *k* is the index for each signal component of the received signal, with *k* = 0 corresponding to the coupled signal component and *k* > 0 corresponding to reflected signal components, *αₖ* is the complex amplitude of the signal component, and *h'(t)* is the total pulse shape including transmitter front-end and receiver front-end impulse responses.
The reflection delay is represented as: ${τ}_{k} = \frac{2 {d}_{k}}{c} , k > 0 ,$ where *dₖ* is the distance between transmit antenna 114 and object 138, and c is the speed of light (i.e., 3 × 10⁸ m/s). For the coupled signal component (i.e., *k* = *0), τ₀* is the propagation delay between the transmitter antenna and the receiver antenna with antenna spacing *d_{tx,rx}*: ${τ}_{0} = \frac{{d}_{tx , rx}}{c} .$

After the receiver analog front end (e.g., low noise amplifier 130 and mixer 128) and analog-to-digital converter 126, digital baseband receive path 124 determines a complex CIR by correlating and descrambling the received signal to recover the transmitted *b[i]* and using coherent averaging to increase the signal-to-noise ratio. The received complex CIR is $y \left[n\right] = {\sum }_{k} {α}_{k} {e}^{- j 2 π {f}_{c} {τ}_{k}} ⋅ h ′ \left(nΔT-{τ}_{k}\right) + z \left[n\right] ,$ where *y[n]* is received complex CIR sample at sampling instant *n*Δ*T*, and *z[n]* is complex Additive White Gaussian Noise (AWGN). Limited isolation of the transmitter and receiver (e.g., isolation of 0-30 dB) and relatively high propagation attenuation of reflections cause the coupled signal component to dominate most of the complex CIR samples, as illustrated in FIG. 2. The coupled path has a complex CIR sample amplitude that is much greater than (e.g., at least ten times greater than) the complex CIR sample amplitude of the reflection path, resulting in a blind zone for reflected signals that overlap with the coupled signal. The coupled path removal technique described above removes static reflections and reflections from close range, thereby causing moving objects and static objects to be undetectable.

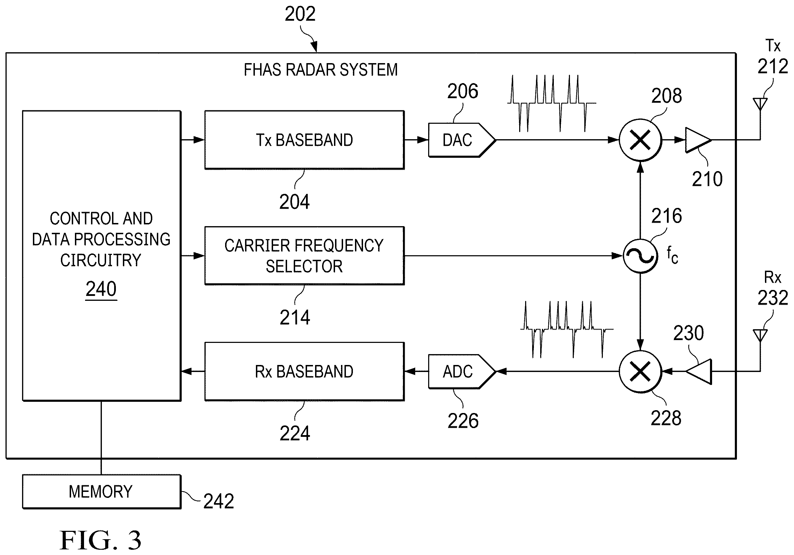

Referring to FIG. 3, in at least one embodiment of an FHAS system, transmitting antenna 212 and receiving antenna 232 are used to sense the environment L times using the carrier signal having slightly different frequencies (e.g., a nominal frequency plus a frequency offset) in different intervals. The angle or phase difference between measurements for observations made using different frequencies is referred to as the angular spread. Signal *si(t)* is the *lth* signal transmitted during interval *l*, where *l* is an integer, and 0 ≤ *l* < *L*: ${s}_{l} \left(t\right) = {e}^{j 2 π \left({f}_{c}+Δ{f}_{l}\right) t} {\sum }_{i} b \left[i\right] h \left(t-i⋅{δ}_{L}⋅{T}_{c}\right) .$ At the receiver, after the receiver analog front end (e.g., low noise amplifier 230 and mixer 228) and analog-to-digital converter 226, digital baseband receive path 224 determines a collected complex CIR for the received signal over the *L* intervals by correlating and descrambling the received signal for each of the *L* intervals to recover the transmitted *b[i]* and using coherent averaging to increase the signal-to-noise ratio. The collected complex CIR is a vector having an element corresponding to each of the *L* intervals: ${y}_{l} \left[n\right] = {\sum }_{k} {α}_{k} {e}^{- j 2 π \left({f}_{c}+Δ{f}_{l}\right) {τ}_{k}} ⋅ h ′ \left(nΔT-{τ}_{k}\right) + {z}_{l} \left[n\right] .$ Assuming a substantially flat total front-end response (e.g., the maximum shift by frequency offset Δ*fₗ* introduces only a negligible change in *h'(t)*), the mixing coefficients for combining coupled signals and reflections differ and have different frequency offsets, with the coefficient for *k*^{th} path rotated by ${Δϕ}_{l , k} = {e}^{- j 2 πΔ {f}_{l} {τ}_{k}} = {e}^{\frac{- j 4 πΔ {f}_{l} ⋅ {d}_{k}}{c}} ,$ where the angular spread is the difference between Δ*ϕ_{l,k}* for the same received signal component *k* and different values of *l*, which correspond different frequencies of the carrier signal.

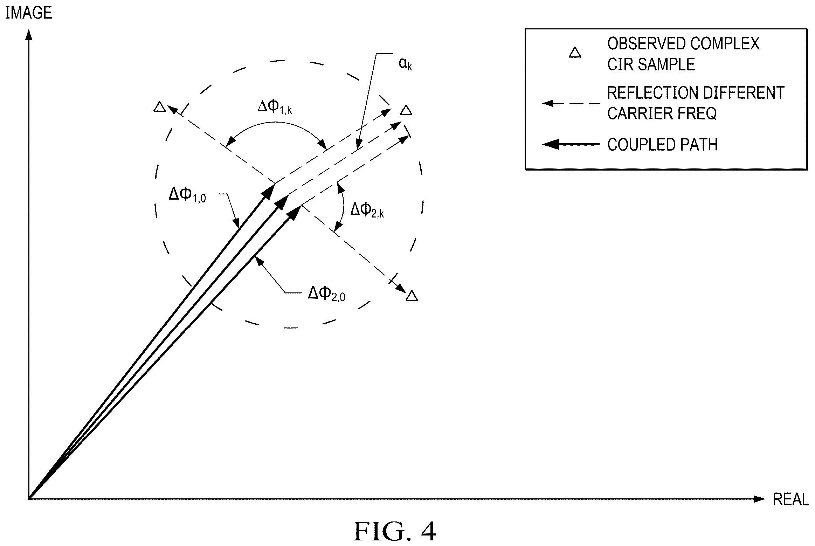

The coupled path (i.e., *k* = 0), which has a relatively small propagation delay between the transmitter antenna and the receiver antenna, generates a much smaller phase difference than a reflection path. In an exemplary radar system operating at UWB channel 5 (i.e., carrier frequency of 6489.6 MHz) and antenna spacing of a half wavelength, i.e., ${d}_{tx , rx} = \frac{c}{2 ⋅ {f}_{c}}$, the phase change of the coupled path is $\frac{- πΔ {f}_{l}}{{f}_{c}} = \frac{- π ⋅ 1 MHz}{6489 MHz} = - 4.84 \times {10}^{- 4} radians = - 0.028 degrees .$ For reflection paths, the phase change is a function of distance (e.g., the phase change increases with increased distance). At 1 m from the transceiver and with frequency offset Δ*fₗ* = 1 MHz, the phase change is $\frac{- 4 πΔ {f}_{l} ⋅ {d}_{k}}{c} = \frac{- 4 π ⋅ {10}^{6} Hz ⋅ 1 m}{3 ⋅ {10}^{8} m / s} = - 0.04189 rad = - 2.4 degrees .$ The combination of a coupled signal component with a reflected signal component to generate each complex CIR sample at sample index n is conceptually illustrated in FIG. 4. The coupled signal component has a negligible or zero angular spread for different frequencies of the carrier signal while the reflected signal components have an angular spread that corresponds to the frequency offset of the carrier signal. Assuming up to one reflection at each sample index *n,* the contribution from prevalent reflector *k*,* is represented as ${β}_{k *} : = {α}_{k *} h ′ \left(nΔT-{τ}_{k *}\right) ,$ where *k** ≠ 0, *β*_{*k**} is a complex coefficient of a complex CIR sample for the reflected signal component, and *τ*_{*k**} is the propagation delay of the reflected signal component. The coupled signal component is represented as a complex coefficient of the complex CIR sample for the coupled path: ${β}_{0} : = {α}_{0} h ′ \left(nΔT-{τ}_{0}\right) ,$ where *τ₀* is the propagation delay for the coupled path. The complex coefficient of the complex CIR sample for the coupled path may include contributions other than the propagation from the transmitter antenna to the receiver antenna, may be determined by calibration techniques, and thus is assumed to be known.

The reflected signal components received using a carrier signal having different frequencies or frequency offsets during different intervals lie on a circle with centers being the coupled signal components, which are slightly rotated with a small Δ*ϕ*_{*l*,0}. In general, the samples form a circular or arc-like pattern when observed for the carrier signal having different frequencies or frequency offsets during different intervals. This pattern, or phase signature, is unique for each reflection delay. In an exemplary configuration, at the same time, i.e., within one sample interval (e.g., *ΔT* = 1 ns), the corresponding phase changes from -2*π*Δ*fₗn*Δ*T* to -2*π*Δ*fₗ*(*n* + 1)Δ*T* with a variation of 0.36 degrees for a frequency offset of 1 MHz and a variation of 36 degrees for a frequency offset of 100 MHz. Accordingly, an FHAS radar system can be a Small-Offset-FHAS (SO-FHAS) radar system or a Large-Offset-FHAS (LO-FHAS) radar system. An SO-FHAS radar system has a maximum carrier frequency offset that is relatively small, i.e., phase signatures for any possible propagation delay within one sample interval may be considered the same. An LO-FHAS radar system has a maximum carrier frequency offset that is relatively large, i.e., phase signatures within one sample interval vary substantially, indicating better separation, or ability to resolve propagation delays that are close to each other.

In at least one embodiment of an FHAS radar system, baseband signal processing separates the reflected signal components from the coupled signal components. For example, the following processing is performed separately for each complex CIR sample, using an observed complex CIR model represented in matrix form (dropping the sample index, n) as: $y = {β}_{0} ⋅ {h}_{0} + {β}_{k *} ⋅ {h}_{k *} + z = Hb + z ,$ where $y = {\left[{y}_{0}\left[n\right],{y}_{1}\left[n\right],⋯,{y}_{L - 1}\left[n\right]\right]}^{T} ,$ ${h}_{0} = {\left[{e}^{- j 2 πΔ {f}_{0} {τ}_{0}}, {e}^{- j 2 πΔ {f}_{1} {τ}_{0}}, ⋯, {e}^{- j 2 πΔ {f}_{L - 1} {τ}_{0}}\right]}^{T} ,$ ${h}_{k *} = {\left[{e}^{- j 2 πΔ {f}_{0} {τ}_{k *}}, {e}^{- j 2 πΔ {f}_{1} {τ}_{k *}}, ⋯, {e}^{- j 2 πΔ {f}_{L - 1} {τ}_{k *}}\right]}^{T} ,$ $z = {\left[{z}_{0}\left[n\right],{z}_{1}\left[n\right],⋯,{z}_{L - 1}\left[n\right]\right]}^{T} ,$ $H = \left[{h}_{0}, {h}_{k *}\right] ,$ and $b = \left[{β}_{0}, {β}_{k *}\right] T ,$ where 0 ≤ / *< L, **b*** is a vector of received signal components, ***H*** is a vector of complex CIR taps, and z is a vector of noise components.

Those augmented observations can be applied to object detection in SO-FHAS radar systems and to object detection in LO-FHAS radar systems. For example, in an SO-FHAS radar system, negligible or no phase signature variation occurs within each sample interval reflection estimation. Therefore, reflection estimation uses a precomputed ***H*,** using a nominal delay value representing the current sample interval. In an embodiment of a radar system, b in the presence of noise is estimated using zero-forcing estimation is used to solve for ***b:*** ${\hat{b}}_{zf} = {\left({H}^{HH}\right)}^{- 1} {H}^{H} y .$ In at least one embodiment, Minimum Mean Squared Error (MMSE) estimation is used to solve for b in the presence of noise: ${\hat{b}}_{mmse} = {\left({H}^{H}H+\hat{{σ}_{n}^{2}}I\right)}^{- 1} {H}^{H} y = {H}^{H} {\left(H{H}^{H}+\hat{{σ}_{n}^{2}}I\right)}^{- 1} y ,$ with estimated noise ${\hat{σ}}_{n}^{2}$.
In an embodiment, data processing circuitry compares the estimated value of reflected signal component *β̂*_{*k**} to a noise-based threshold value to determine whether a reflection is present. If the data processing circuitry determines that a reflected signal is present, then the data processing circuitry uses the delay or position of a detected signal in the observed complex CIR model ***y*** to determine a time-of-flight using conventional techniques, which is then translated to distance from the radar device. In an embodiment, data processing circuitry uses the complex coefficient *β̂*_{*k**} and the corresponding propagation delay *τₖ* for target detection and distance estimation. For example, if a reflected signal component is detected for index *k*, then the corresponding propagation delay *τₖ* is the time-of-flight, which is used to compute distance e.g., ${d}_{k} = \frac{{τ}_{k} ⋅ c}{2}$.

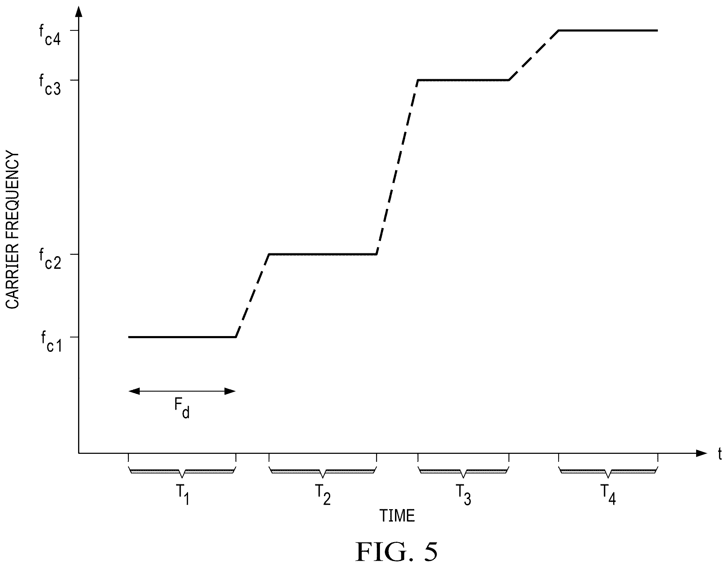

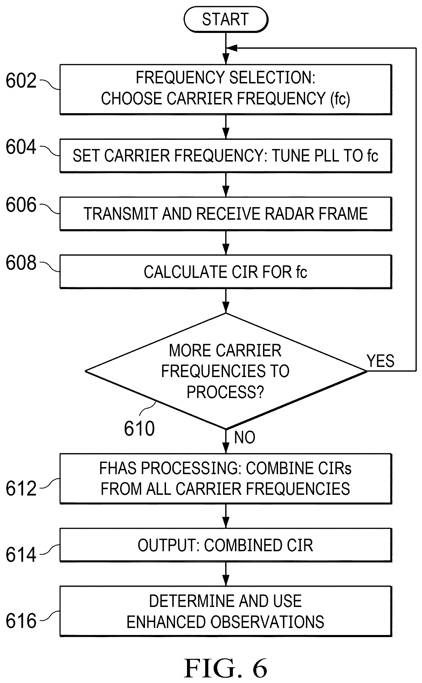

Referring to FIGS. 3, 5, and 6, in an embodiment, radar transceiver 202 implements the FHAS technique described above by using transmitting antenna 212 and receiving antenna 232 to sense the environment multiple times using the carrier signal having slightly different frequencies or frequency offsets. In at least one embodiment, the frequency offset between frequencies of the carrier signal at different intervals (e.g., a frequency offset of 1 MHz) is much less than the frequency of the carrier signal (e.g., a frequency of at least 500 MHz). Carrier frequency selector 214 selects a frequency for carrier signal *f_{c}* during an interval and provides a corresponding digital code (e.g., corresponding to a frequency or frequency offset) to programmable oscillator 216 (602). Programmable oscillator 216 configures a PLL or other circuit to provide carrier signal *f_{c}* with the selected frequency during the interval (604). For example, carrier signal *f_{c}*, has frequency *f_{c1}* during interval *T₁,* frequency *f_{c2}* during interval *T₂*, frequency *f_{c3}* during interval *T₃*, and frequency *f_{c4}* during interval *T₄*. In an embodiment, each interval has duration *F_{d}*, although in other embodiments, intervals have different durations. In addition, other embodiments use different numbers of intervals and frequencies or frequency offsets.

FHAS radar transceiver 202 transmits and receives a radar frame during interval *F_{d}*(606). Baseband transmitter path 204 and digital-to-analog converter 206 generate a baseband signal using IR-UWB. Programmable oscillator 216 provides carrier signal *f_{c}* to mixer 208 which converts the baseband signal to a higher frequency signal. Power amplifier 210 amplifies the higher frequency signal and drives antenna 212 to transmit a corresponding electromagnetic signal over the air. Antenna 232 receives a coupled signal, mostly from antenna 212 and receives signals reflected by objects in the environment. Low-noise amplifier 230 amplifies the received signal and mixer 228 converts the amplified received signal to baseband. ADC 226 provides a digital received signal to digital baseband receive path 224, which performs correlation and descrambling and provides a recovered digital signal to control and data processing circuitry 240. Control and data processing circuitry 240 calculates the complex CIR for carrier signal *f_{c}* having the selected frequency during the interval (608). In an embodiment, control and data processing circuitry 240 is custom circuitry configured to perform the operations described above. In other embodiments, control and data processing circuitry 240 includes a processor (e.g., general purpose processor or digital signal processor) that executes instructions stored in memory 242 and is configured to process the recovered digital signal to calculate the complex CIR as described above.

If control and data processing circuitry 240 determines that more carrier frequencies are to be processed (i.e., *l < L)* (610), then carrier frequency selector provides a corresponding digital code for the next frequency or frequency offset to programmable oscillator 216 (602), programmable oscillator 216 updates the frequency of the carrier signal (604), radar transceiver 202 transmits and receives a radar frame during interval *F_{d}*(606), and control and data processing circuitry 240 determines a corresponding complex CIR for the carrier signal at the updated frequency during the interval (608).

If control and data processing circuitry 240 determines that no more carrier frequencies are to be processed (i.e., *l == L*) (610), then control and data processing circuitry 240 combines the complex CIRs from all of the intervals (612) and provides a collected complex CIR (614). Control and data processing circuitry 240 uses the collected complex CIR for enhanced observations, e.g., to analyze signal contributions and a coupled signal component of the received signal, compare the estimated reflection value *β̂*_{*k**} to a noise-based threshold value to determine whether a reflection is present, and use at least one estimated reflected component of *b* to enhance estimates of distance, geometry, or surrounding environment of an object (616).

In an LO-FHAS radar system, due to large frequency offsets, the corresponding difference in phase signature between different reflection delays within one sample interval cannot be considered constant, and thus, cannot be predetermined. In at least one embodiment of an LO-FHAS radar system, the current sample interval is subdivided into subintervals within which the phase variation within in the subinterval is negligible and the vector of complex CIR taps H can be assumed constant. Since each subinterval is assumed to have a different angular spread due to a slightly different delay that is amplified by large frequency offsets, a vector of received signal components b is computed accordingly using a linear suppression technique described above (e.g., using zero-forcing estimation or MMSE estimation) for SO-FHAS.

Thus, FHAS techniques have been described. The FHAS technique may be used to separate reflections from static objects from a coupled path, reduce the range of a blind zone in radar, or provide capabilities for increasing precision of object distance estimation using the angular spread of reflections have been described. Although the invention is described herein with reference to specific embodiments, various modifications and changes can be made without departing from the scope of the present invention as set forth in the claims below. For example, although described with reference to an UWB radar system, techniques described herein can be used in other pulse-based modulation schemes or radar systems using other modulation schemes, e.g., phase modulated schemes such as Phase-Modulated Continuous Wave (PMCW) Systems, which transmit a continuous wave signal with a modulated phase to encode information and use phase information to measure distance and velocity. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

Unless stated otherwise, terms such as "first" and "second" are used to arbitrarily distinguish between the elements such terms describe. Thus, these terms are not necessarily intended to indicate temporal or other prioritization of such elements.

## Claims

1. A method for sensing an environment by a radar transceiver, the method comprising:
receiving a first received signal during a first interval using a carrier signal having a first frequency;
receiving a second received signal during a second interval using the carrier signal having a second frequency, the second frequency being different from the first frequency; and
estimating a reflected signal component of the first received signal based on the first received signal and the second received signal, the reflected signal component and a second reflected signal component of the second received signal having an angular spread corresponding to an offset between the first frequency and the second frequency.

2. The method as recited in claim 1 further comprising:
detecting presence of the reflected signal component based on a comparison of the estimated reflected signal component to a predetermined threshold value.

3. The method as recited in claim 1 or 2 wherein a frequency offset between the second frequency and the first frequency is associated with a variable phase within a sample interval, the estimated reflected signal is associated with a subinterval of the sample interval including a plurality of subintervals, and each subinterval of the plurality of subintervals has a constant phase.

4. The method as recited in any preceding claim wherein estimating the reflected signal component comprises:
generating a collected complex Channel Impulse Response, CIR, based on the first received signal and the second received signal; and
determining the estimated reflected signal component and an estimated coupled signal component based on the collected complex CIR and a channel estimate.

5. The method as recited in any preceding claim wherein a first channel impulse response observed by the radar transceiver of a coupled path of a coupled signal component overlaps or substantially overlaps a second channel impulse response observed by the radar transceiver of a reflected path of the reflected signal component.

6. The method as recited in any preceding claim wherein a dynamic range of the receiving by the radar transceiver is less than a ratio of a first signal level of a coupled signal component and a second level of the reflected signal component.

7. The method as recited in any preceding claim wherein the reflected signal component is reflected by an object at close range.

8. The method as recited in any preceding claim wherein the reflected signal component is reflected by a static object.

9. The method as recited in any preceding claim wherein the offset between the first frequency and the second frequency is at least an order of magnitude less than the first frequency.

10. The method as recited in any preceding claim further comprising:
transmitting information during the first interval using the carrier signal having the first frequency; and
transmitting the information during the second interval using the carrier signal having the second frequency,
wherein the information is transmitted using an Impulse Radio, IR, Ultra-Wideband, UWB, signal.

11. The method as recited in any preceding claim further comprising:
transmitting information during the first interval using the carrier signal having the first frequency; and
transmitting the information during the second interval using the carrier signal having the second frequency,
wherein the information is transmitted using a Phase-Modulated Continuous Wave, PMCW, signal.

12. A radar transceiver comprising:
a receiver circuit path configured to receive a first received signal based on a carrier signal during a first interval and configured to receive a second received signal based on the carrier signal during a second interval; and
a programmable oscillator configured to provide the carrier signal having a first frequency during the first interval and to provide the carrier signal having a second frequency during the second interval; and
data processing circuitry configured to estimate a reflected signal component of the first received signal based on the first received signal and the second received signal, the reflected signal component and a second reflected signal component of the second received signal having a predetermined angular spread corresponding to an offset between the first frequency and the second frequency.

13. The radar transceiver as recited in claim 12 wherein the data processing circuitry is further configured to detect presence of the reflected signal component based on a comparison of the estimated reflected signal component to a predetermined threshold value.

14. The radar transceiver as recited in claim 12 or 13 further comprising:
a transmitter circuit path configured to transmit information during the first interval using the carrier signal having the first frequency and to transmit the information during the second interval using the carrier signal having the second frequency; and
a carrier frequency selector circuit configured to provide a control signal to the programmable oscillator, the control signal having a first value during the first interval and having a second value during the second interval,
wherein the programmable oscillator provides the carrier signal based on the control signal.

15. The radar transceiver as recited in any of claims 12 to 14
wherein the data processing circuitry is further configured to generate a collected complex Channel Impulse Response (CIR) based on the first received signal and the second received signal, wherein the data processing circuitry is configured to estimate the reflected signal component and an estimated coupled signal component based on the collected complex CIR and a channel estimate.
